# EUROPEAN PATENT APPLICATION

(11) **EP 1 852 866 A1**
(43) Date of publication of application: **07.11.2007**
(21) Application number: 06713873.5
(22) Date of filing: 16.02.2006
(51) Int. Cl.: G11B 20/12, G11B 7/0045, G11B 20/10, H04N 5/92, H04N 7/26

(54) **TWO-LAYER RECORDING DISC RECORDER AND METHOD FOR RECORDING VIDEO INFORMATION ON TWO-LAYER RECORDING DISC**

(30) Priority: 17.02.2005 JP 2005040361
(71) Applicant: Pioneer Corporation, Tokyo 153-8654 (JP)
(72) Inventor: HORA, Takashi, anazono 4-chome, Tokorozawa-shi, Saitama (JP)
(74) Representative: Haley, Stephen
(86) International application number: PCT/JP2006/302732
(87) International publication number: WO 2006/088092

(57) **Abstract**

While video information is recorded onto a dual-layer recording disk (2) in real time, it is judged whether or not a layer-change is necessary. If it is judged that the layer-change is necessary, a video data string (21C) in which a closed GOP (22) is disposed at the head is generated, and the video data string is recorded into a recording area in the second layer of the dual-layer recording disk immediately after the layer-change. This allows the closed GOP (22) to be always disposed at the head of the recording area in the second layer.

## Description

### Technical Field

The present invention relates to an apparatus for and a method of recording video information onto a dual-layer recording disk, and a computer program.

### Background Art

In general, a compression method according to the MPEG standard (hereinafter referred to a "MPEG method") is used when video images are recorded in a DVD video format. Under the MPEG method, video images are recorded as image data in each frame or field. The MPEG method employs a method in which certain image data is expressed by using a difference between the image data and past or future image data, i.e. predictive coding. Under the predictive coding, each image data is converted to any data of an I-picture (Intra-picture), a P-picture (Predictive-picture), and a B-picture (Bidirectionally predictive-picture), and it is then recorded.

MPEG video data is a video data string obtained by appending control information or management information to a plurality of image data, which are converted to any one of the I-picture, the P-picture, and the B-picture. The video data string can be divided into data groups, each of which is referred to as a GOP (Group Of Pictures). In other words, it can be said that the MPEG video data is a video data string in which a plurality of GOPs are arranged. Normally, one GOP includes 15 frames of image data.

The GOP includes an open GOP and a closed GOP. The open GOP includes the image data in which images cannot be reproduced completely without reference to the image data included in another GOP. The closed GOP does not include the image data in which images cannot be reproduced completely without reference to the image data included in another GOP. In other words, two B-pictures which are located at the head of the open GOP cannot be decoded without reference to the P-picture which is located in the tail of the previous GOP (or GOP located one before) of the GOP including the B-pictures. Therefore, it is necessary to refer to the previous GOP whenever the open GOP is decoded. In contrast, all the B-pictures and P-pictures included in the closed GOP can be decoded with reference to the I-picture or P-picture included in the GOP including the aforementioned B-pictures and P-pictures. Therefore, normally, it is unnecessary to refer to another GOP when the closed GOP is decoded.

When video images or video information are recorded onto a DVD-R of a single sided single layer type in the DVD video format and the MPEG method, normally, encoding is performed such that only the GOP corresponding to the head of the video information is set as the closed GOP, and all the subsequent GOPs are set as the open GOPs.

### Disclosure of Invention

### Subject to be Solved by the Invention

Currently, a DVD-R of a single sided double layer type (hereinafter referred to as a "dual-layer DVD-R") is under development. A single sided single layer DVD-R has a recording capacity of 4.7GB. In contrast, the dual-layer DVD-R has a recording capacity of 8.5GB. Therefore, according to the dual-layer DVD-R, a large data size of video information can be continuously recorded onto one disk.

However, there is the following problem when the video information is continuously recorded onto the dual-layer DVD-R. For example, it is assumed that video information corresponding to a size greater than the size of a recording area in the first layer of the dual-layer DVD-R (e.g. video information corresponding to 8GB) is continuously recorded onto an unused dual-layer DVD-R. In this case, a change in the recording layer (hereinafter referred to as a "layer-change / layer-jump") is made while the video information is recorded. As described above, when the video information is recorded onto a DVD-R of a single sided single layer type in the DVD video format and the MPEG method, normally, encoding is performed such that only the GOP corresponding to the head of the video information is set as the closed GOP, and all the subsequent GOPs are set as the open GOPs. If the encoding method is applied to the dual-layer DVD-R, the layer-change causes the video data string of the open GOPs to be recorded at the head of a recording area in the second layer of the dual-layer DVD-R. As described above, two B-pictures which are located at the head of the open GOP cannot be decoded without reference to the P-picture which is located in the tail of the previous GOP of the GOP including the B-pictures. Therefore, in order to decode the GOP recorded at the head of the recording area in the second layer, it is necessary to make the layer-change again and refer to the GOP located in the tail of the video data recorded in the first layer. However, making the layer-change again reduces swiftness and continuity of the decoding process. As a result, there possibly arises a problem that reproduced video images are temporarily stopped (or frozen) upon the layer-change.

On the other hand, in order to maintain the swiftness and continuity of the decoding process, it is also considered that the decoding process is forced to be continued with disregard to the undecodability of the two B-pictures located at the head of the recording area in the second layer. Performing such a process, however, causes a lack of video images immediately after the layer-change, resulting in a disturbance of the reproduced video images.

In order to solve the above-exemplified problems, it is therefore a first object of the present invention to provide an apparatus for a dual-layer recording disk, a method of recording video information onto a dual-layer recording disk and a computer program, which can realize quick and complete decoding of video data, which is continuously recorded on a write-once or rewritable type recording disk with two or more recording layers on a single side, such as a dual-layer DVD-R.

It is a second object of the present invention to provide an apparatus for a dual-layer recording disk, a method of recording video information onto a dual-layer recording disk and a computer program, which can prevent, upon the layer-change, a lack of the partial reproduced video images of video data, which is continuously recorded on a write-once or rewritable type recording disk with two or more recording layers on a single side.

It is a third object of the present invention to provide an apparatus for a dual-layer recording disk, a method of recording video information onto a dual-layer recording disk and a computer program, which can prevent, upon the layer-change, a disturbance of the reproduced video images of video data, which is continuously recorded on a write-once or rewritable type recording disk with two or more recording layers on a single side.

### Means for Solving the Object

The above object of the present invention can be achieved by a first recording apparatus for recording video information onto a dual-layer recording disk, the recording apparatus provided with: a receiving device for receiving the video information; an encoding device for encoding the video information received by the receiving device to thereby generate a video data string in which a plurality of data groups are arranged, each data group having a plurality of image data; a recording device for recording the video data string generated by the encoding device onto the dual-layer recording disk; and a controlling device for controlling an encoding process by the encoding device and a recording process by the recording device, the controlling device provided with a judging device for judging whether the video information is recorded into a recording area in a first layer or a recording area in a second layer of the dual-layer recording disk, on the basis of a size of a space recording area in the first layer of the dual-layer recording disk, the encoding device generating a first video data string when the recording of the video information is changed to the recording area in the second layer of the dual-layer recording disk on the basis of a judgment result by the judging device, the first video data string including at least one independent data group disposed at a head and a plurality of dependent data groups subsequently arranged, the independent data group having a plurality of image data which do not include image data in which images cannot be reproduced completely without reference to image data included in another data group, each of the dependent data groups having a plurality of image data which include image data in which images cannot be reproduced completely without reference to image data included in another data group, the recording device recording the first video data string into the recording area in the second layer of the dual-layer recording disk.

The above object of the present invention can be achieved by a first recording method of encoding video information to thereby generate a video data string in which a plurality of data groups are arranged and of recording the video data string onto a dual-layer recording disk, each data group having a plurality of image data, the recording method provided with: a judging process of judging whether the video information is recorded into a recording area in a first layer or a recording area in a second layer of the dual-layer recording disk, on the basis of a size of a space recording area in the first layer of the dual-layer recording disk; a first encoding process of encoding the video information to thereby generate a video data string when the recording of the video information is changed to the recording area in the second layer of the dual-layer recording disk on the basis of a judgment result by the judging device, the video data string including at least one independent data group disposed at a head and a plurality of dependent data groups subsequently arranged, the independent data group having a plurality of image data which do not include image data in which images cannot be reproduced completely without reference to image data included in another data group, each of the dependent data groups having a plurality of image data which include image data in which images cannot be reproduced completely without reference to image data included in another data group; and a first recording process of recording the video data string generated in the first encoding process into the recording area in the second layer of the dual-layer recording disk.

The above object of the present invention can be achieved by a first computer program for making a computer function as the first recording apparatus of the present invention.

The above object of the present invention can be achieved by a second recording apparatus for recording video information onto a dual-layer recording disk, the recording apparatus provided with: a receiving device for receiving the video information; an encoding device for encoding the video information received by the receiving device to thereby generate a video data string in which a plurality of GOPs are arranged; a recording device for recording the video data string generated by the encoding device onto the dual-layer recording disk; and a controlling device for controlling an encoding process by the encoding device and a recording process by the recording device, the controlling device provided with a judging device for judging whether the video information is recorded into a recording area in a first layer or a recording area in a second layer of the dual-layer recording disk, on the basis of a size of a space recording area in the first layer of the dual-layer recording disk, the encoding device generating a first video data string when the recording of the video information is changed to the recording area in the second layer of the dual-layer recording disk on the basis of a judgment result by the judging device, the first video data string including at least one closed GOP disposed at a head and a plurality of open GOPs subsequently arranged, the recording device recording the first video data string into the recording area in the second layer of the dual-layer recording disk.

The above object of the present invention can be achieved by a second recording method of encoding video information to thereby generate a video data string in which a plurality of GOPs are arranged and of recording the video data string onto a dual-layer recording disk, the recording method provided with: a judging process of judging whether the video information is recorded into a recording area in a first layer or a recording area in a second layer of the dual-layer recording disk, on the basis of a size of a space recording area in the first layer of the dual-layer recording disk; a first encoding process of encoding the video information to thereby generate a video data string when the recording of the video information is changed to the recording area in the second layer of the dual-layer recording disk on the basis of a judgment result by the judging device, the video data string including at least one closed GOP disposed at a head and a plurality of open GOPs subsequently arranged; and a first recording process of recording the video data string generated in the first encoding process into the recording area in the second layer of the dual-layer recording disk.

The above object of the present invention can be achieved by a second computer program for making a computer function as the second recording apparatus of the present invention.

The above object of the present invention can be also achieved by a first computer program product in a computer-readable medium for tangibly embodying a program of instructions executable by a computer, to make the computer function as the first recording apparatus of the preset invention. The above object of the present invention can be also achieved by a second computer program product in a computer-readable medium for tangibly embodying a program of instructions executable by a computer, to make the computer function as the second recording apparatus of the preset invention.

According to each of the computer program products of the present invention, the aforementioned first or second recording apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned first or second recording apparatus of the present invention.

### Brief Description of Drawings

[FIG. 1] FIG. 1 is a block diagram showing an embodiment of the recording apparatus of the present invention.
[FIG. 2] FIG. 2 is an explanatory diagram showing an encoding process and a recoding process in the embodiment of the recording apparatus of the present invention.
[FIG. 3] FIG. 3 is an explanatory diagram showing the encoding process and the recoding process continued from FIG. 2.
[FIG. 4] FIG. 4 is an explanatory diagram showing the encoding process and the recoding process continued from FIG. 3.
[FIG. 5] FIG. 5 is an explanatory diagram showing a recording area on a dual-layer recording disk in which a video data string is recorded by the encoding process and the recoding process in the embodiment of the recording apparatus of the present invention.
[FIG. 6] FIG. 6 is an explanatory diagram showing the encoding process and the recoding process continued from FIG. 4.
[FIG. 7] FIG. 7 is a block diagram showing an example of the recording apparatus of the present invention.
[FIG. 8] FIG. 1 is a flowchart showing the operation of a data processing device.

### Description of Reference Codes

- 1: recording apparatus
- 2: dual-layer recording disk
- 11: receiving device
- 12: encoding device
- 13: recording device
- 14: controlling device
- 15: judging device
- 21B: second video data string
- 21C: first video data string

### Best Mode for Carrying Out the Invention

Hereinafter, the embodiment of the present invention will be explained with reference to the drawings.

### (Recording Apparatus)

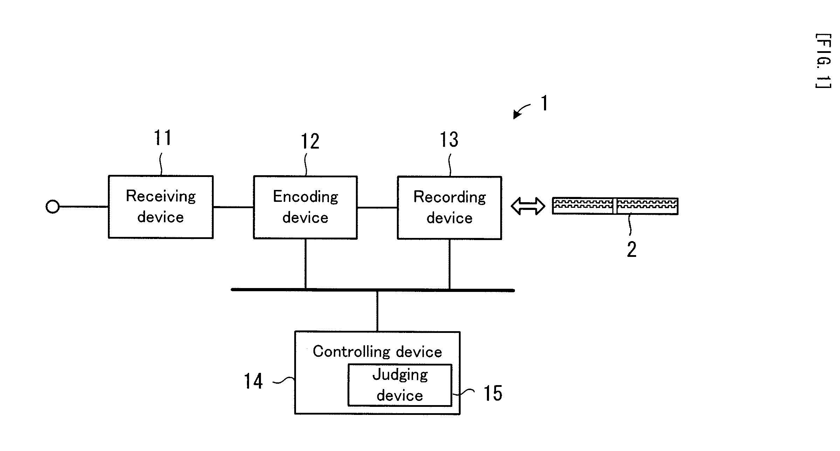

FIG. 1 shows an embodiment of the recording apparatus of the present invention. A recording apparatus 1 is an apparatus for encoding video information received from the exterior in accordance with the MPEG standard and for recording a video data string generated by the encoding onto a dual-layer recording disk 2. The recording apparatus 1 is, for example, a DVD recorder. The dual-layer recording disk 2 is a write-once or rewritable type recording disk of a single sided dual layer type, such as a dual-layer DVD-R.

As shown in FIG. 1, the recording apparatus 1 is provided with: a receiving device 11; an encoding device 12; a recording device 13; and a controlling device 14.

The receiving device 11 receives video information supplied from the exterior. The receiving device 11 is equipped with an input terminal and an interface circuit, for example. Incidentally, the interface circuit is not always necessary and may not be provided. For example, when a digital video camera with a function of outputting video information according to a DV (Digital Video) standard is connected to the input terminal of the recording apparatus 1, the receiving device 11 receives the video information according to the DV standard. Moreover, if the input terminal of the recording apparatus 1 is connected to a digital television broadcast network which supplies MPEG2-TS (Transport Stream) video information, the receiving device 11 receives the MPEG2-TS video information.

The encoding device 12 encodes the video information received by the receiving device 11 to thereby generate a video data string in which a plurality of GOPs are arranged. On the encoding device 12, the encoding process is performed in accordance with the MPEG method. That is, in the encoding process in the MPEG method, for example, the video information supplied from a digital video camera is converted to any of the image data of an I-picture, a P-picture, and a B-picture, under predictive coding. For example, 15 frames of the converted image data are grouped into one GOP. Moreover, in the encoding process in the MPEG method, two types of GOPs are generated, namely, the closed GOP and the open GOP The open GOP includes the image data in which images cannot be reproduced completely without reference to the image data included in another GOP. In other words, two B-pictures which are located at the head of the open GOP cannot be decoded without reference to the P-picture which is located in the tail of the previous GOP (or GOP located one before) of the GOP including the B-pictures. Therefore, it is necessary to refer to the previous GOP whenever the open GOP is decoded. In contrast, the closed GOP does not include the image data in which images cannot be reproduced completely without reference to the image data included in another GOP. In other words, all the B-pictures and P-pictures included in the closed GOP can be decoded with reference to the I-picture or P-picture included in the GOP including the aforementioned B-pictures and P-pictures. Therefore, normally, it is unnecessary to refer to another GOP when the closed GOP is decoded. The encoding device 12 encodes the video information in accordance with the control of the controlling device 14 to thereby generate a video data string in which at least one closed GOP is disposed at the head and a plurality of open GOPs are subsequently arranged (i.e. a first video data string) or a video data string in which only a plurality of closed GOP are arranged (i.e. a second video data string). The encoding device 12 can be realized by an arithmetic processing circuit, a semiconductor memory, and the like.

Incidentally, the GOP is a specific example of the data group, the closed GOP is a specific example of the independent data group, and the open GOP is a specific example of the dependent data group.

The recording device 13 records the video data string generated by the encoding device 12, onto the dual-layer recording disk 2. Specifically, the recording device 13 records the video data string into a recording area in the first layer or a recording area in the second layer of the dual-layer recoding disk 2, in accordance with the control of the controlling device 14. The recording device 13 also makes the layer-change of the dual-layer recoding disk 2. The recording device 13 may be additionally provided with a function of appending an error correction code to the video data string or a function of performing a recording modulation process. The recording device 13 can be realized by a disk drive apparatus, an arithmetic processing circuit, a semiconductor memory, and the like.

The controlling device 14 controls the encoding process by the encoding device 12 and the recording process by the recording device 13. The controlling device 14 can be realized by an arithmetic processing circuit, a semiconductor memory, and the like. The controlling device 14 is connected to the encoding device 12 and the recording device 13 through a bus, for example. The controlling device 14 is provided with a judging device 15.

The judging device 15 judges whether the video information is recorded into the recording area in the first layer or the recording area in the second layer of the dual-layer recording disk 2, on the basis of the size of a space recording area in the first layer of the dual-layer recording disk 2.

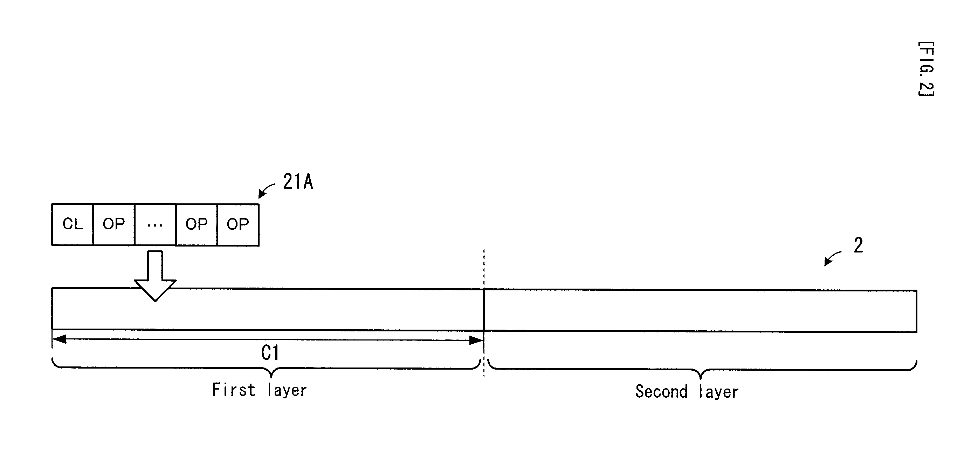

Hereinafter, the operation of the recording apparatus 1 will be explained with reference to FIG. 2 to FIG. 6. FIG. 2 to FIG. 6 show the operation that the recording apparatus 1 records one title of video contents supplied from the exterior onto the unused dual-layer recording disk 2. The data size of all the video contents is greater than the size of the recording area in the first layer of the dual-layer recording disk 2. Moreover, the process of recording the video contents by the recording apparatus 1 is performed in real time and in continuity, with regard to all the video contents. Incidentally, the video contents herein mean a production including the video information. Moreover, in FIG. 2 to FIG. 6, "CL" means the closed GOP, and "OP" means the open GOP.

Firstly, a user connects, for example, a digital video camera with the recording apparatus 1. Then, the user presses a recording standby button equipped for the recording apparatus 1 and inputs an instruction to prepare for the recording start to the recording apparatus 1. Moreover, the user operates the digital video camera and outputs the video contents.

When it is started to supply the video contents from the exterior to the recording apparatus 1 as described above, the receiving device 11 receives the video contents and supplies them to the encoding device 12. Then, the judging device 15 examines the size of the space recording area in the first layer of the dual-layer recording disk 2. Then, the judging device 15 judges whether a first portion (or a head portion) of the video contents is recorded into the recording area in the first layer or the recording area in the second layer of the dual-layer recording disk 2, on the basis of the examination result. As shown in FIG. 2, no data is recorded in the recording area in the first layer of the dual-layer recording disk 2. As a result, the entire recording area in the first layer is the space recording area and has a size of C1. Therefore, the judging device 15 judges that the first portion of the video contents is recorded into the recording area in the first layer of the dual-layer recording disk 2. In accordance with the judgment result, the controlling device 14 controls the encoding device 12 and the recording device 13.

That is, in accordance with the control of the controlling device 14, the encoding device 12 encodes the first portion of the video contents to thereby generate a video data string 21A in which one closed GOP is disposed at the head and a plurality of open GOPs are subsequently arranged. This is because the GOP at the head of all the video contents is decoded at the beginning upon the reproduction of the vide contents and it needs to be the GOP which does not include the image data in which images cannot be reproduced completely without reference to the image data included in another GOP, namely, the closed GOP. Then, in accordance with the control of the controlling device 14, the recording device 13 records the video data string 21A into the head of the space recording area in the first layer of the dual-layer recording disk 2.

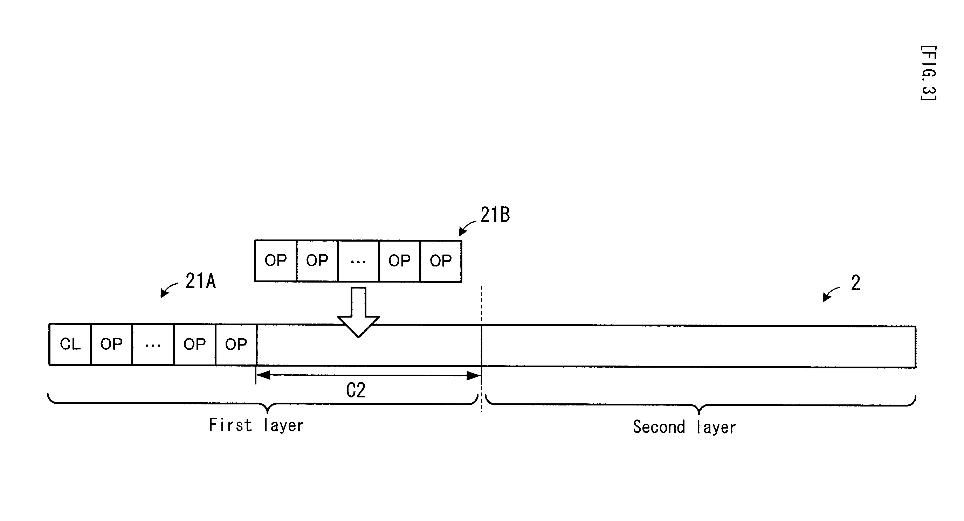

Moreover, it is continued to supply the video contents from the exterior to the recording apparatus 1, in real time and in continuity. The receiving device 11 continues to receive the video contents and supply them to the encoding device 12. Then, the judging device 15 examines the size of the space recording area in the first layer of the dual-layer recording disk 2. Then, the judging device 15 judges whether a second portion (or the former half of a middle portion) of the video contents is recorded into the recording area in the first layer or the recording area in the second layer of the dual-layer recording disk 2, on the basis of the examination result. As shown in FIG. 3, the video data string 21A is already recorded in the recording area in the first layer of the dual-layer recording disk 2. As a result, the space recording area in the first layer has a size of C2. The size C2 is large enough to record the second portion of the video contents. Therefore, the judging device 15 judges that the second portion of the video contents is recorded into the recording area in the first layer of the dual-layer recording disk 2. In accordance with the judgment result, the controlling device 14 controls the encoding device 12 and the recording device 13.

That is, in accordance with the control of the controlling device 14, the encoding device 12 encodes the second portion of the video contents to thereby generate a video data string 21B (i.e. the second video data string) in which only a plurality of open GOPs are arranged. This is because the video data string 21A is already recorded immediately before the video data string 21B and the GOP disposed at the head of the video data string 21B can refer to the GOP disposed at the tail of the video data string 21A upon the reproduction (or decoding) of the video contents. Then, the recording device 13 records the video data string 21B into the space recording area in the first layer of the dual-layer recording disk 2. This allows the video data string 21B to be recorded immediately after the video data string 21A in the recording area in the first layer.

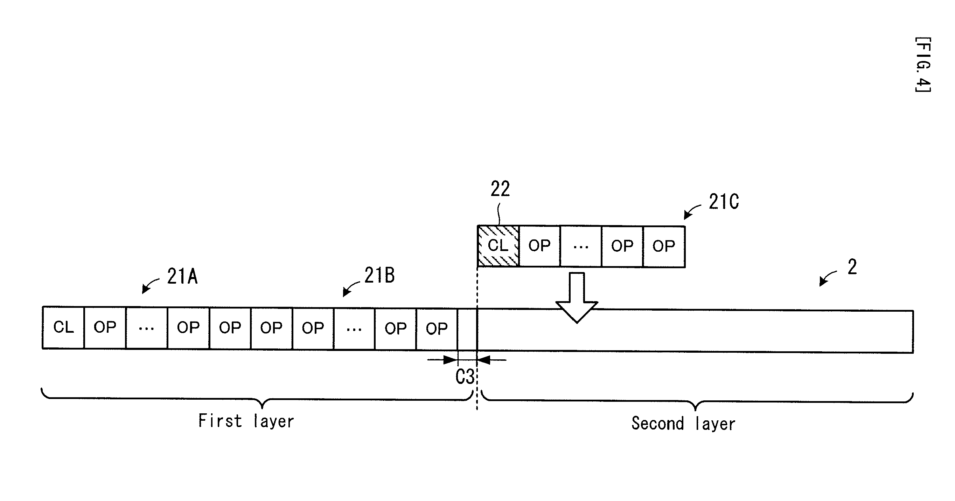

Moreover, it is continued to supply the video contents from the exterior to the recording apparatus 1, in real time and in continuity. The receiving device 11 continues to receive the video contents and supplies them to the encoding device 12. Then, the judging device 15 examines the size of the space recording area in the first layer of the dual-layer recording disk 2. Then, the judging device 15 judges whether a third portion (or the latter half of the middle portion) of the video contents is recorded into the recording area in the first layer or the recording area in the second layer of the dual-layer recording disk 2, on the basis of the examination result. As shown in FIG. 4, the video data strings 21A and 21B are already recorded in the recording area in the first layer of the dual-layer recording disk 2. As a result, the space recording area in the first layer has a size of C3. The size C3 is too small to record the third portion of the video contents. Therefore, the judging device 15 judges that the second portion of the video contents is recorded into the recording area in the second layer of the dual-layer recording disk 2. In accordance with the judgment result, the controlling device 14 controls the encoding device 12 and the recording device 13.

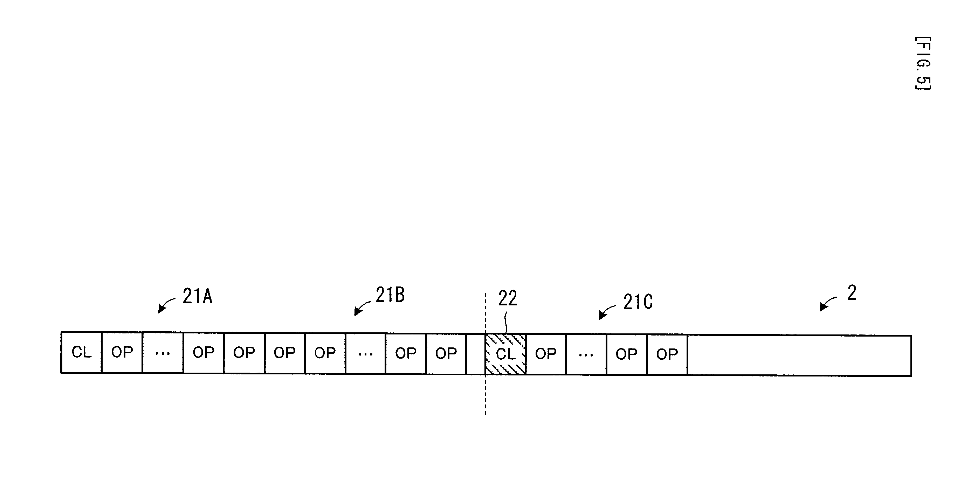

That is, the encoding device 12 encodes the third portion of the video contents when the recording of the video contents is changed to the recording area in the second layer of the dual-layer recording disk 2 on the basis of the judgment result of the judging device 15, to thereby generate a video data string 21C (i.e. the first video data string) in which at least one closed GOP 22 is disposed at the head and a plurality of open GOPs are subsequently arranged, in accordance with the control of the controlling device 14. Then, the recording device 13 makes the layer-change to change the recoding layer of the dual-layer recording disk 2 from the first layer to the second layer. Then, the recording device 13 records the video data string 21C into the head of the recording area in the second layer of the dual-layer recording disk 2. This allows the closed GOP 22 to be disposed at the head of the recording area in the second layer of the dual-layer recording disk 2, as shown in FIG. 5.

Moreover, it is continued to supply the video contents from the exterior to the recording apparatus 1, in real time and in continuity. The receiving device 11 continues to receive the video contents and supplies them to the encoding device 12. Then, the judging device 15 examines the size of the space recording area of the dual-layer recording disk 2. Then, the judging device 15 judges that a fourth portion (or a tail portion) of the video contents is recorded into the recording area in the second layer of the dual-layer recording disk 2. In accordance with the judgment result, the controlling device 14 controls the encoding device 12 and the recording device 13.

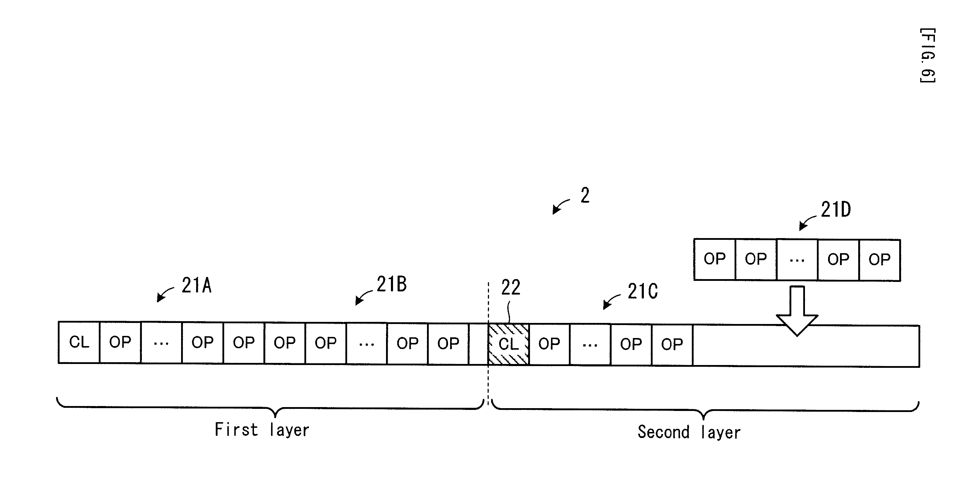

That is, as shown in FIG. 6, the encoding device 12 encodes the fourth portion of the video contents to thereby generate a video data string 21D (i.e. the second video data string) in which only a plurality of open GOPs are arranged, in accordance with the control of the controlling device 14. Then, the recording device 13 records the video data string 21D into the space recording area in the second layer of the dual-layer recording disk 2. This allows the video data string 21D to be recorded into the recording area in the second layer of the dual-layer recording disk 2, following the video data string 21C. There is no more to the process of recording the video contents.

According to the recording apparatus 1, as described above, when the video contents whose size is greater than that of the space recording area in the first layer of the dual-layer recording disk 2 are recorded onto the dual-layer recording disk 2 in real time and in continuity, the closed GOP 22 can be always disposed at the head of the recording area in the second layer of the dual-layer recording disk 2. As described above, the closed GOP can be decoded without reference to another GOP. Therefore, even if the layer-change is made while the video contents (or the video data string) recorded on the dual-layer recording disk 2 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

Incidentally, the recording apparatus 1 can be realized by preparing a computer program and making a computer read the computer program, wherein the computer program is adapted to realize the receiving device, the encoding device, the recording device, the controlling device, and the judging device.

### (Recording Method)

An embodiment of the recording method of the present invention is a method of encoding video information received from the exterior in accordance with the MPEG method to thereby generate a video data string in which a plurality of GOPs are arranged and of recording the video data string onto a dual-layer recording disk. The recording method is provided with: a judging process; a first encoding process; a first recording process; a second encoding process; and a second recording process.

In the judging process, it is judged whether the video information is recorded into a recording area in the first layer or a recording area in the second layer of the dual-layer recording disk, on the basis of the size of a space recording area in the first layer of the dual-layer recording disk.

In the first encoding process, the video information is encoded to thereby generate a video data string in which at least one closed GOP is disposed at the head and a plurality of open GOPs are subsequently arranged when the recording of the video information is changed to the recording area in the second layer of the dual-layer recording disk on the basis of a judgment result by the judging device (refer to FIG. 4).

In the first recording process, the video data string generated in the first encoding process is recorded into the recording area in the second layer of the dual-layer recording disk (refer to FIG. 4 and FIG. 5).

In the second encoding process, in order to record the video information into the recording area of the dual-layer recording disk following the video data string generated by the first encoding process, the video information is encoded to thereby generate a video data string in which only a plurality of open GOPs are arranged (refer to FIG. 6).

In the second recording process, the video data string generated in the second encoding process is recorded into the recording area of the dual-layer recording disk, following the video data string generated in the first encoding process (refer to FIG. 6).

According to the recording method, when the video information whose size is greater than that of the space recording area in the first layer of the dual-layer recording disk is recorded onto the dual-layer recording disk in real time and in continuity, the closed GOP can be always disposed at the head of the recording area in the second layer of the dual-layer recording disk. Therefore, even if the layer-change is made while the video information (or the video data string) recorded on the dual-layer recording disk 2 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

### Example

Hereinafter, an example of the present invention will be explained with reference to the drawings. In the following example, the recording apparatus of the present invention is applied to a DVD recorder. This is one preferable example to carry out the present invention.

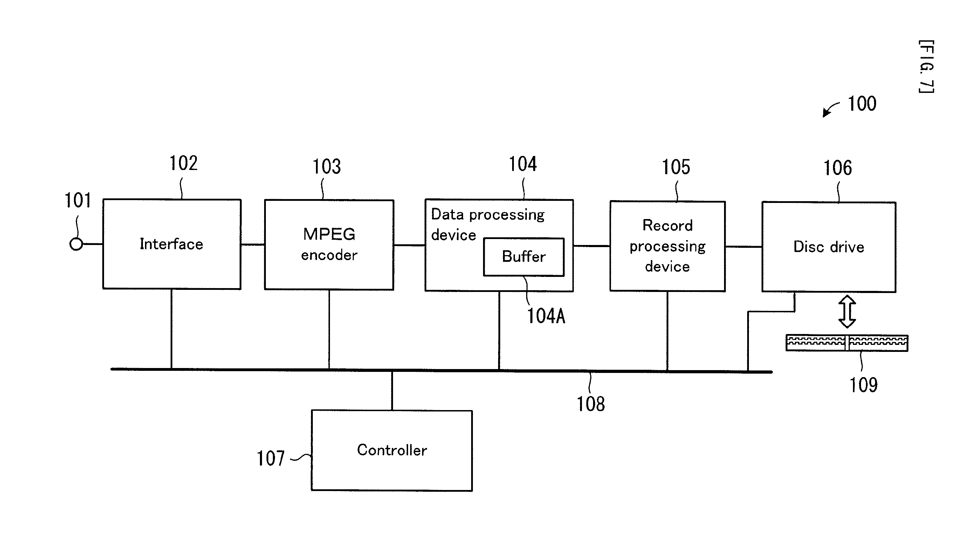

FIG. 7 shows a DVD recorder, which is an embodiment of the present invention. As shown in FIG. 7, a DVD recorder 100 is an apparatus for encoding video contents supplied from the exterior in accordance with the MPEG standard to thereby generate a video data string and for recording the video data string onto a dual-layer DVD-R 109. The DVD recorder 100 is provide with: an input terminal 101; an interface circuit 102; a MPEG encoder 103; a data processing device 104; a record processing deice 105; a disc drive 106; and a controller 107. The devices are connected to each other through a bus 108. Moreover, a buffer 104A is built in the data processing device 104.

The DVD recorder 100 operates as follows. For example, video contents, which are supplied from a digital video camera or a digital television broadcast network, are supplied through the input terminal 101 and the interface 102 to the MPEG encoder 103. The MPEG encoder 103 encodes the video contents in accordance with the MPEG method to thereby a plurality of VOBUs (Video Object Units) in each of which two GOPs are arranged, and the MPEG encoder 103 supplies the VOBUs to the data processing device 104 one after another. The data processing device 104 stores the VOBUs, which are supplied one after another, into the buffer 104A and appends navigation packs to the VOBUs to thereby form one VOB (Video Object). If the data size of the video contents is large, a plurality of VOBs may be formed on the data processing device 104. The formed VOB is supplied to the record processing device 105. The record processing device 105 appends an error correction code to the data included in the VOB and further performs a recording modulation process on the data included in the VOB. Then, the VOB is supplied to the disc drive 106. The disc drive 106 records the VOB onto the dual-layer DVD-R 109. Incidentally, the controller 107 controls, as a whole, the interface 102, the MPEG encoder 103, the data processing device 104, the record processing device 105, and the disc drive 106. The controller 107 also assists in data exchange among the devices.

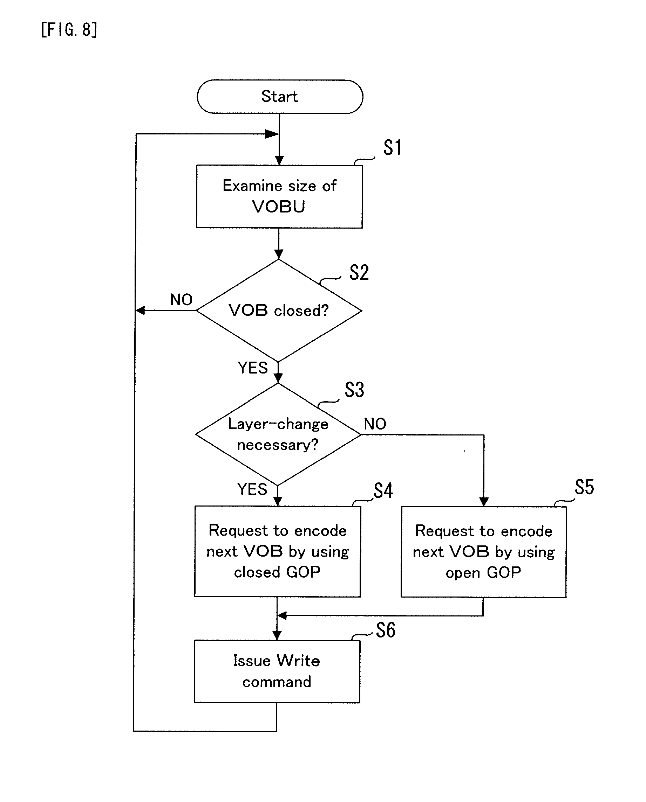

FIG. 8 shows the operation of the data processing device 104 in the operation of the DVD recorder 100 as described above. As shown in FIG. 8, if a certain VOBU is supplied from the MPEG encoder 103, the data processing device 104 stores the VOBU into the buffer 104A and then examines the size of the VOBU (step S1). Then, the data processing device 104 judges whether or not one VOB is formed of a plurality of VOBUs stored in the buffer 104A. That is, the data processing device 104 judges whether or not one VOB is closed (step S2). For example, if the plurality of VOBUs stored in the buffer 104A are not enough to form one VOB, the data processing device 104 does not close the VOB (the step S2: NO). Then, the data processing device 104 continues to obtain a new VOBU to store the VOBU and then performs the step S1.

For example if the VOBUs enough to form one VOB are stored in the buffer 104A, the data processing device 104 closes the VOB (the step S2: YES). Then, the data processing device 104 assumes that the currently formed VOB has been recorded in the space recording area in the first layer of the dual-layer recording disk and calculates the size of the remaining space recording area in the first layer in this case. Then, the data processing device 104 judges whether or not the layer-change is necessary when a next VOB is recorded, on the basis of the calculation result (step S3). If the size of the remaining space recording area in the first layer is small (the step S3: YES), the data processing device 104 issues a request that the GOP disposed at the head of the next VOB is set to the closed GOP (step S4). This request is transmitted to the MPEG encoder 103. The MPEG encoder 103 responds to the request and performs the encoding process so that the GOP disposed at the head of the next VOB is set to the closed GOP.

On the other hand, if the size of the remaining space recording area in the first layer is large, the layer-change is not necessary when the next VOB is recorded. In this case (the step S3: NO), the data processing device 104 issues a request that the next VOB includes only the open GOPs (step S5). This request is transmitted to the MPEG encoder 103. The MPEG encoder 103 responds to the request and performs the encoding process so that the next VOB includes only the open GOPs.

After issuing the request in the step S4 or the step S5, the data processing device 104 issues a write command (step S6). By this, the VOB formed of the VOBUs currently stored in the buffer 104A is supplied to the record processing device 105, and the VOB is recorded onto the dual-layer DVD-R 109 by the disc drive 106. Then, such a processing loop from the step S1 to the step S6 is repeated, and all the video contents are recorded onto the dual-layer DVD-R 109 in real time and in continuity.

Incidentally, the VOB is recorded into the recording area in the first layer or the recording area in the second layer of the dual-layer DVD-R, in accordance with the write command issued in the step S6. At this time, whether the VOB is recorded into the recording area in the first layer or the recording area in the second layer is already determined in the step S4 or the step S5 in the previous processing loop. In other words, if the step S4 is performed in the previous processing loop, the VOB formed in the current processing loop is recorded into the recording area in the second layer. In contrast, if the step S5 is performed in the previous processing loop, the VOB formed in the current processing loop is recorded into the recording area in the first layer. Such a process can be realized in the step S4 by issuing the request that the GOP disposed at the head of the next VOB is set to the closed GOP and by issuing (a) a request that the recording layer of the dual-layer DVD-R 109 is changed from the first layer to the second layer and (b) a request that the next VOB is recorded into the recording area in the second layer of the dual-layer DVD-R 109. In the same manner, such a process can be realized in the step S5 by issuing the request that the next VOB includes only the open GOPs and by issuing a request that the next VOB is recorded into the recording area in the first layer of the dual-layer DVD-R 109.

Incidentally, it is obvious that the GOP disposed at the head is the closed GOP in the VOB recorded first when the video contents are recorded onto a dual-layer disk.

As described above, according to the DVD recorder 100, if the layer-change is necessary, the closed GOP can be disposed at the head of the VOB, and the VOB can be recorded into the recording area in the second layer (i.e. the head of the recording area in the second layer) of the dual-layer DVD-R 109 immediately after the layer-change. This allows the closed GOP to be always disposed at the head of the recording area in the second layer of the dual-layer DVD-R 109. Therefore, even if the layer-change is made while the video information (or the video data string) recorded on the dual-layer DVD-R 109 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

Incidentally, in the present invention, various changes may be made without departing from the essence or spirit of the invention which can be read from the claims and the entire specification. A recording apparatus, a recording method, and a computer program, which involve such changes, are also intended to be within the technical scope of the present invention.

### Industrial Applicability

The recording apparatus for a dual-layer recording disk and the method of recording video information onto a dual-layer recording disk according to the present invention can be applied to a recording apparatus, such as a DVD recorder, for recording video data onto a dual-layer DVD-R or the like. Moreover, they can be also applied to a recording apparatus or the like which is mounted on various computer equipment for consumer use or for commercial use, or which can be connected to various computer equipment.

## Claims

1. A recording apparatus for recording video information onto a dual-layer recording disk, said recording apparatus comprising:
a receiving device for receiving the video information;
an encoding device for encoding the video information received by said receiving device to thereby generate a video data string in which a plurality of data groups are arranged, each data group having a plurality of image data;
a recording device for recording the video data string generated by said encoding device onto the dual-layer recording disk; and
a controlling device for controlling an encoding process by said encoding device and a recording process by said recording device,
said controlling device comprising a judging device for judging whether the video information is recorded into a recording area in a first layer or a recording area in a second layer of the dual-layer recording disk, on the basis of a size of a space recording area in the first layer of the dual-layer recording disk,
said encoding device generating a first video data string when the recording of the video information is changed to the recording area in the second layer of the dual-layer recording disk on the basis of a judgment result by the judging device, the first video data string including at least one independent data group disposed at a head and a plurality of dependent data groups subsequently arranged, the independent data group having a plurality of image data which do not include image data in which images cannot be reproduced completely without reference to image data included in another data group, each of the dependent data groups having a plurality of image data which include image data in which images cannot be reproduced completely without reference to image data included in another data group,
said recording device recording the first video data string into the recording area in the second layer of the dual-layer recording disk.

2. The recording apparatus according to claim 1, wherein
said encoding device generates a second video data string in which only a plurality of dependent groups are arranged, and
said recording device records the second video data string into the recording area of the dual-layer recording disk, following the first video data string.

3. A recording method of encoding video information to thereby generate a video data string in which a plurality of data groups are arranged and of recording the video data string onto a dual-layer recording disk, each data group having a plurality of image data, said recording method comprising:
a judging process of judging whether the video information is recorded into a recording area in a first layer or a recording area in a second layer of the dual-layer recording disk, on the basis of a size of a space recording area in the first layer of the dual-layer recording disk;
a first encoding process of encoding the video information to thereby generate a video data string when the recording of the video information is changed to the recording area in the second layer of the dual-layer recording disk on the basis of a judgment result by the judging device, the video data string including at least one independent data group disposed at a head and a plurality of dependent data groups subsequently arranged, the independent data group having a plurality of image data which do not include image data in which images cannot be reproduced completely without reference to image data included in another data group, each of the dependent data groups having a plurality of image data which include image data in which images cannot be reproduced completely without reference to image data included in another data group; and
a first recording process of recording the video data string generated in said first encoding process into the recording area in the second layer of the dual-layer recording disk.

4. The recording method according to claim 3, comprising:
a second encoding process of encoding the video information to thereby generate a video data string in which only a plurality of dependent groups are arranged; and
a second recording process of recording the video data string generated in said second encoding process, into the recording area of the dual-layer recording disk, following the video data string generated in said first encoding process.

5. A recording apparatus for recording video information onto a dual-layer recording disk, said recording apparatus comprising:
a receiving device for receiving the video information;
an encoding device for encoding the video information received by said receiving device to thereby generate a video data string in which a plurality of GOPs are arranged;
a recording device for recording the video data string generated by said encoding device onto the dual-layer recording disk; and
a controlling device for controlling an encoding process by said encoding device and a recording process by said recording device,
said controlling device comprising a judging device for judging whether the video information is recorded into a recording area in a first layer or a recording area in a second layer of the dual-layer recording disk, on the basis of a size of a space recording area in the first layer of the dual-layer recording disk,
said encoding device generating a first video data string when the recording of the video information is changed to the recording area in the second layer of the dual-layer recording disk on the basis of a judgment result by the judging device, the first video data string including at least one closed GOP disposed at a head and a plurality of open GOPs subsequently arranged,
said recording device recording the first video data string into the recording area in the second layer of the dual-layer recording disk.

6. The recording apparatus according to claim 5, wherein
said encoding device generates a second video data string in which only a plurality of open GOPs are arranged, and
said recording device records the second video data string into the recording area of the dual-layer recording disk, following the first video data string.

7. A recording method of encoding video information to thereby generate a video data string in which a plurality of GOPs are arranged and of recording the video data string onto a dual-layer recording disk, said recording method comprising:
a judging process of judging whether the video information is recorded into a recording area in a first layer or a recording area in a second layer of the dual-layer recording disk, on the basis of a size of a space recording area in the first layer of the dual-layer recording disk;
a first encoding process of encoding the video information to thereby generate a video data string when the recording of the video information is changed to the recording area in the second layer of the dual-layer recording disk on the basis of a judgment result by the judging device, the video data string including at least one closed GOP disposed at a head and a plurality of open GOPs subsequently arranged; and
a first recording process of recording the video data string generated in said first encoding process into the recording area in the second layer of the dual-layer recording disk.

8. The recording method according to claim 7, comprising:
a second encoding process of encoding the video information to thereby generate a video data string in which only a plurality of open GOPs are arranged; and
a second recording process of recording the video data string generated in said second encoding process, into the recording area of the dual-layer recording disk, following the video data string generated in said first encoding process.
